# EUROPEAN PATENT SPECIFICATION

(11) **EP 0 294 691 B1**
(45) Date of publication and mention of the grant of the patent: **01.09.1993**
(21) Application number: 88108694.6
(22) Date of filing: 31.05.1988
(51) Int. Cl.: G01K 13/02, G01K 1/18, G01K 7/22

(54) **Resistance temperature detector**
Widerstandstemperaturfühler
Détecteur de température à résistance

(30) Priority: 12.06.1987 JP 145313/87; 16.09.1987 JP 140002/87 U
(43) Date of publication of application: 14.12.1988
(73) Proprietor: MITSUBISHI JUKOGYO KABUSHIKI KAISHA, Tokyo 100 (JP); Kabushika Kaisha Okazaki Seisakusho, Kobe-shi Hyogo-ken (JP)
(72) Inventor: Taguchi, Seizo Kobe Shipyard & Engine Works of, Hyogo-ku Kobe-shi Hyogo-ken (JP); Oketani, Toshiharu Kobe Shipyard & Engine Works of, Hyogo-ku Kobe-shi Hyogo-ken (JP); Ohashi, Michihiro Kobe Shipyard & Engine Works of, Hyogo-ku Kobe-shi Hyogo-ken (JP); Tanaka, Hideaki Kobe Shipyard & Engine Works of, Hyogo-ku Kobe-shi Hyogo-ken (JP); Terao, Hiroshi, Akashi-shi Hyogo-ken (JP)
(74) Representative: Henkel, Feiler, Hänzel & Partner

(56) References cited:
- EP-A- 0 153 661
- AT-B- 359 166
- DE-U- 8 614 743
- US-A- 3 893 058
- US-A- 3 928 837

## Description

### BACKGROUND OF THE INVENTION

### Field of the Invention:

The present invention relates to a resistance temperature detector having a high responsibility and a high reliability for measuring a varying temperature of high-pressure liquid such as a coolant in a pressurized water reactor and its arrangement structure, and more particularly to a resistance temperature detector provided with both normal and preparatory temperature sensing elements.

### Description of the Prior Art:

Operation and control of an atomic power plant are required to have an extremely high safety, and hence, detectors for detecting various parameters to be used in that control, for instance, temperature detectors are required to have a high reliability. In a resistance temperature detector that is widely used as a temperature detector, the most expectable fault is breakdown of a resistance wire, but since it is difficult to perfectly prevent this fault, it has been a common practice to provide doubly normal and preparatory resistance temperature detectors.

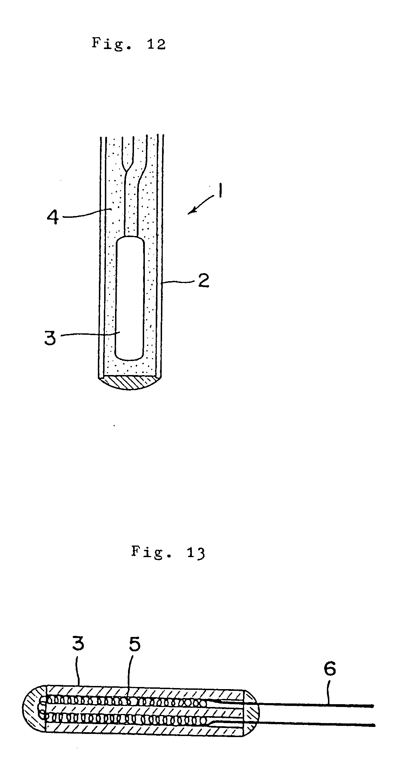

In Fig. 12 is shown a cross-section of one example of a resistance temperature detector for measuring a temperature of high pressure fluid in the prior art.

In a resistance temperature detector 1, a ceramic sinter type temperature sensing resistance element 3 is disposed within a protective case 2, and the space within the protective case 2 is filled with filler material 4 consisting of magnesium oxide (MgO). As shown in Fig. 13, in the ceramic sinter type temperature sensing resistance element 3 is integrally assembled a double element 5, and lead wires 6 of the double element 5 are connected to an integral sheath cable not shown.

The resistance temperature detector 1 is disposed within fluid and temperature measurement for the fluid is carried out.

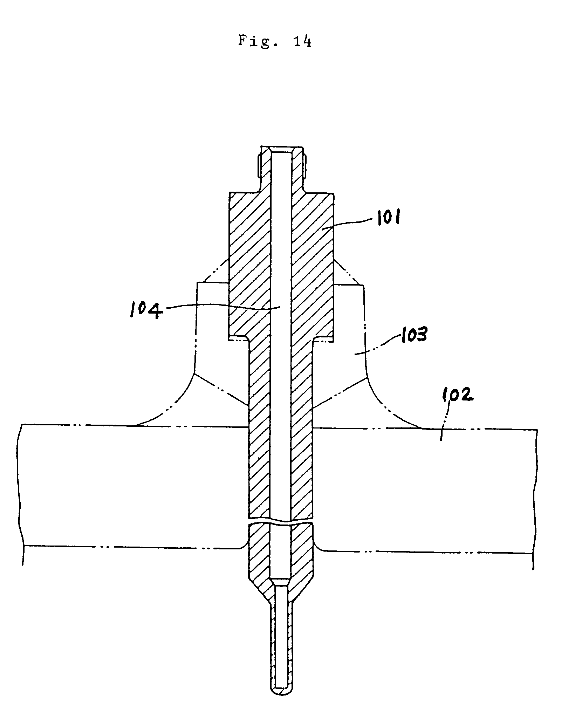

In addition, in Fig. 14 is shown a cross-section side view of a well for a resistance temperature detector in the prior art.

A well structure for a resistance temperature detector (hereinafter abbreviated as "RTD well structure") 101 is mounted by welding to a tube stub 103 provided on a piping 102 through which highly pressurized fluid flows. In the RTD well structure 101 is formed a single insert portion 104 in which a resistance temperature detector (hereinafter abbreviated as "RTD") is inserted and held, and the tip end of the insert portion 104 is positioned within the piping 102.

The fluid flowing through the piping 102 comes into contact with the tip end of the insert portion 104, and the temperature of the fluid within the piping 102 is measured by the RTD inserted and held in the insert portion 104.

With regard to such type of resistance temperature detector, in order to insure continuity of control it is desirable to dispose double temperature detectors, that is, normal and backup temperature detectors at the same location.

Moreover, since the temperature of a coolant would vary abruptly, the RTD must have a high responsiveness.

Furthermore, the responsiveness would be possibly degraded during use of the temperatures detector.

Therefore, in order to insure safety and reliability of control, it has been increasingly demanded to dispose a plurality of temperature detectors at the same location, to continuously check soundnesses of the temperature detectors during a controlled operation, and to use a detection output of a normally operating temperature detector.

Accordingly, it has been required to realize a resistance temperature detector which meets the above-mentioned demand. Such a detector is known from EP-A-0 153 661.

However, the above-described temperature detector 1 in the prior art shown in Fig. 12 involved the following problems. Firstly, as an unseparated double element 5 was used, in the event that any fault occurred in a normal resistance temperature detector 1, it was impossible to continue measurement at the same location of the fluid by means of a backup resistance temperature detector. Secondly, in the resistance temperature detector 1 in the prior art, since the filler material 4 was filled within the protective case 2 and the ceramic sinter type temperature sensing resistance element 3 was buried in the filler material, the inside of the protective case 2 was not hollow, a heat capacity of the portion of the protective case 2 was increased by the existence of the filler material 4, and also, since the ceramic sinter type temperature sensing resistance element 3 was not held in tight contact with the inner wall surface of the protective case 2, delay of heat transmission from the outside occurred. Accordingly, these factors restricted the responsibility of the resistance temperature detector 1. In addition, since the filler material 4 consisted of magnesium oxide, its hygroscopicity was high. Thirdly, as the sheath cable was of integral type, in the case where two resistance temperature detectors 1 consisting of, for instance, normal and backup temperature detectors were used, when degradation of insulation due to high temperature occurred between the lead wires 6, a shunt circuit was created between the lead wires 6, and so, in an important temperature measuring system there was a possibility that a serious problem might be caused.

Furthermore, in the above-described RTD well structure 101 in the prior art shown in Fig. 14, as an insert portion 104 is formed only one, the number of RTD's that can be held in one RTD well structure 101 is one. Accordingly, in the event that in view of a temperature measuring scheme by making use of RTD's it is necessitated to provide a preparatory RTD in addition to a normal RTD, an additional RTD well structure 101 must be provided at a separate location. In order to additionally provide an RTD well structure 101, it is necessary to provide a new hole and a new tube stub 103 on the piping 102, and hence materials and work are increased. In addition, while the normal RTD and the preparatory RTD should measure a temperature at the same location in view of the temperature measuring scheme, in the case where the RTD well structure 101 is newly provided in addition at a separate location, the normal and backup RTD's are compelled to perform temperature measurement at separate fluid locations, that is, at the locations where thermo-hydraulic conditions are different, resulting in that the importance of the measurement by the backup RTD is reduced.

### SUMMARY OF THE INVENTION:

The present invention has been worked out in view of the first-mentioned problem in the prior art, and the invention has it as an object to provide a resistance temperature detector in which normal and backup resistance elements are disposed on an inner wall surface of a temperature sensing assembly forming a hollow space therein and lead wires of the resistance elements are connected to independent sheath cables, whereby improvements in responsiveness and reliability of temperature measurement can be achieved.

Also, the present invention has been worked out in view of the last-mentioned problem in the prior art, and the invention has it another object to provide a temperature measuring arrangement having a well structure for resistance temperature detectors, which structure can hold a plurality of resistance temperature detectors without degrading reliability of measurement.

According to the present invention, there is provided a resistance temperature detector according to claim 1.

According to the present invention, owing to the fact that two normal and backup temperature sensing resistance elements are disposed within a thin-walled tubular sheath temperature sensing assembly, even in the event that one of the temperature sensing resistance elements has become faulty, temperature measurement can be done at the same location by means of the other temperature sensing resistance element.

Moreover, according to the present invention, since the temperature sensing resistance elements are secured onto an inner surface of a thin-walled tubular sheath temperature sensing assembly, the distance between the outside fluid and the resistance elements becomes short, hence thermal conductivity is enhanced, and also, since a sealed vacant space is formed within the temperature sensing assembly, a heat capacity of the temperature sensing assembly becomes small, and thereby responsibility is improved. In addition, as the lead wires of the respective resistance elements are respectively connected to independent sheath cables, degradation of insulation would not occur between the wirings for the respective resistance elements, and so, reliability is enhanced.

Furthermore, according to the present invention, a plurality of resistance temperature detectors can be held by a single well structure, and so, measurement by means of a normal or backup resistance temperature detector can be carried out at the same place. Since the dry wells in which resistance temperature detectors are inserted, are formed independently of each other as nipple-shaped protrusions adapted to accommodate resistance temperature detectors, the fluid can come close to the same protrusions under equal thermo-hydraulic conditions.

The above-metnioned and other objects, features and advantages of the present invention will become more apparent by reference to the following description of preferred embodiments of the invention taken in conjunction with the accompanying drawings.

### BRIEF DESCRIPTION OF THE DRAWINGS:

In the accompanying drawings:
Fig. 1 is a side view partly cut away of a temperature measuring apparatus provided with a resistance temperature detector according to the preferred embodiment of the present invention;
Fig. 2 is a cross-section side view of the same resistance temperature detector;
Fig. 3 is a transverse cross-section view taken along line III-III in Fig. 2 as viewed in the direction of arrows;
Fig. 4 is a cross-section side view of a ceramic sinter type temperature sensing resistance element;
Fig. 5 is a wiring diagram for the temperature sensing resistance elements;
Fig. 6 is a transverse cross-section view taken along line VI-VI in Fig. 1 as viewed in the direction of arrows;
Fig. 7 is a diagram comparatively showing response characteristics according to the present invention and in the prior art;
Fig. 8 is a cross-section side view of a temperature measuring arrangement according to the preferred embodiment of the present invention;
Fig. 9 is a plan view of the same arrangement;
Fig. 10 is a cross-section side view of a nipple-shaped protrusion in the temperature measuring arrangement;
Fig. 11 is a cross-section side view of a resistance temperature detector according to the present invention;
Fig. 12 is a cross-section side view of a resistance temperature detector in the prior art;
Fig. 13 is a cross-section side view of a ceramic sinter type temperature sensing resistance element in the same resistance temperature detector in the prior art; and
Fig. 14 is a cross-section side view of a well structure for a resistance temperature detector in the prior art.

### DESCRIPTION OF THE PREFERRED EMBODIMENTS:

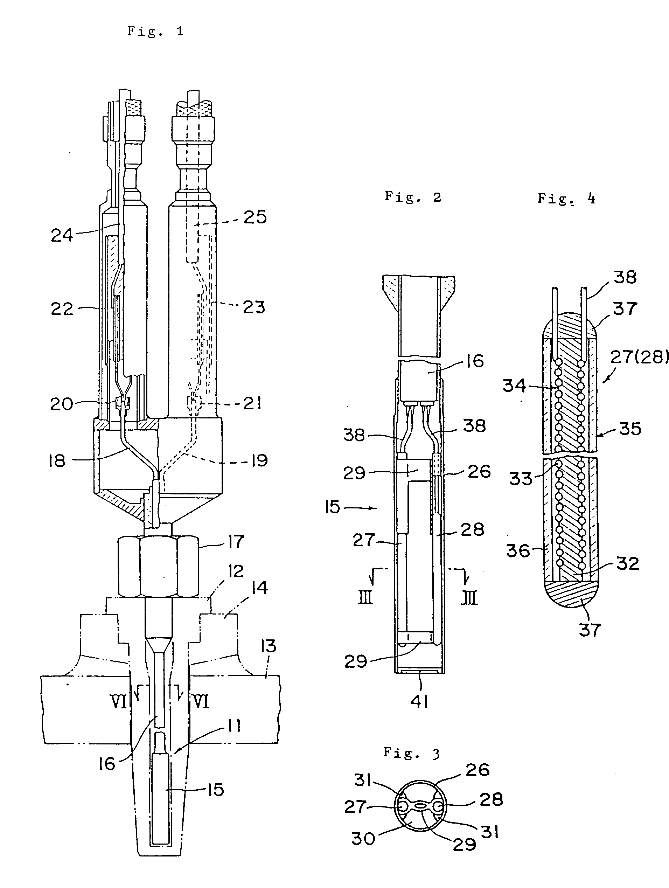

At first, description will be made on the preferred embodiment of the present invention with reference to Figs. 1 to 6.

As shown in Fig. 1, a well 12 for holding a resistance temperature detector 11 is mounted by welding to a tube stub 14 provided on a piping 13. The resistance temperature detector 11 consists of a thin-walled tubular sheath temperature sensing assembly 15 and a sheath cable assembly 16 connected thereto, and the resistance temperature detector 11 is inserted into the well 12 and fixed there by means of a cap nut 17 for measuring a fluid temperature within the piping 13. Lead wires 18 and 19 extending from the sheath cable assembly 16 are, after passing through terminals 20 and 21, connected by silver soldering to corresponding outer cables 24 and 25, respectively, by means of outer cable connectors 22 and 23.

As shown in Figs. 2 and 3, the thin-walled tubular sheath temperature sensing assembly 15 is composed of a protective case 26 and two ceramic sinter type temperature sensing resistance elements 27 and 28 serving as resistance elements, one resistance element being provided for normal use, but the other being provided for backup use. The protective case 26 has thin-walled tubular shape of 6.5 mm in diameter and about 40 mm in length, and onto the inner surface of the protective case 26 are secured ceramic sinter type temperature sensing resistance elements 27 and 28 of 1.2 mm in diameter and about 18 mm in length at an angular interval of 180° as separated by a spacer 29 so that a vacant space may be formed within the protective case 26. For securing the ceramic sinter type temperature sensing resistance elements 27 and 28, an inorganic adhesive 31 having thermal resistance, radiation resistance and a high thermal conductivity is used.

As shown in Fig. 4, each of the ceramic sinter type temperature sensing resistance elements 27 and 28 is composed of a coil-shaped resistance element 34 in which a temperature sensing resistance wire 33 made of platinum is wound in a coil shape around an elongated ceramic mandrel 32, and a ceramic outer shell 35, and the ceramic outer shell 35 consists of a ceramic tube 36 surrounding the sensing resistance wire 33 and a pair of end plates 37 disposed at the opposite ends of the ceramic mandrel 32. Two insulated lead wires 38 are led out from each of the ceramic sinter type temperature sensing resistance elements 27 and 28. In addition, with reference to Fig. 2, the bottom end of the protective case 26 is sealingly closed by fixedly welding an end plate 41, while at the top end of the protective case 26 is mounted a sheath cable assembly 16, and thereby a sealed vacant space 30 is formed within the protective case 26.

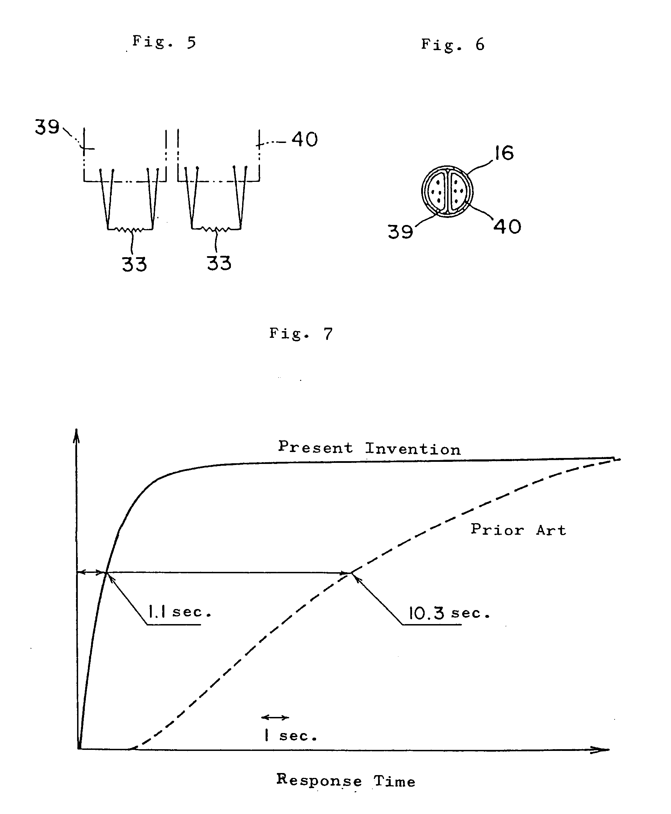

As shown in Fig. 6, within the sheath cable assembly 16 are provided two sheath cables 39 and 40 each having a semi-circular cross-section as wrapped by an outer wall of the sheath cable assembly 16. In these sheath cables 39 and 40, magnesium oxide (MgO) is used as an insulator, and Ni wires are used as core wires. The lead wires 38 of the ceramic sinter type temperature sensing elements 27 and 28 are respectively connected to the sheath cables 39 and 40.

The above-described resistance temperature detector 11 is mounted to the well 12 to perform temperature measurement for the fluid within the piping 13.

In the above-described resistance temperature detector 11, since the ceramic sinter type temperature sensing resistance elements 27 and 28 are secured to the inner surface of the thin-walled protective case 26, the ceramic sinter type temperature sensing resistance elements 27 and 28 would come close to the outer fluid whose temperature is to be measured. Furthermore, as the ceramic sinter type temperature sensing resistance elements 27 and 28 are secured to the protective case 26 by means of inorganic adhesive 31 having thermal resistance, radiation resistance and high thermal conductivity, a heat transmission property between the outer fluid whose temperature is to be measured and the ceramic sinter type temperature sensing resistance elements 27 and 28 is high, and moisture resistance, thermal resistance and radiation resistance thereof are also extremely excellent. Moreover, since the temperature sensing resistance element assembly 15 contains only the ceramic sinter type temperature sensing resistance elements 27 and 28 therein and the remaining vacant space 30 entirely consists of air, a heat capacity of the temperature sensing resistance element assembly 19 can be made small. As a result, as shown in Fig. 7, in contrast to the fact that response was made in about 10.3 seconds in the prior art (illustrated by a dotted line curve in Fig. 7), the resistance temperature detector 11 according to the present invention can respond in about 1.1 seconds (illustrated by a solid line curve in Fig. 7), and thus, responsiveness can be improved.

In addition, owing to the fact that the lead wires 38 of the ceramic sinter type temperature sensing resistance elements 27 and 28 are respectively connected to the sheath cables 39 and 40 which are independent of each other, the possibility that a shunting phenomenon caused by high temperature may arise between the conductors of the respective ceramic sinter type temperature sensing resistance elements 27 and 28, is eliminated, and contact between the conductors can be prevented. Consequently, in the case where measurement is effected for a temperature of fluid in which temperature distribution at various positions in a piping is not uniform due to insufficient stirring effects for the fluid within the piping such as, for instance, a coolant within a hot leg piping for a primary coolant in an atomic reactor, by employing the resistance temperature detector 11, measurement can be done with the temperature detecting positions for normal use and for backup use made to precisely coincide with each other.

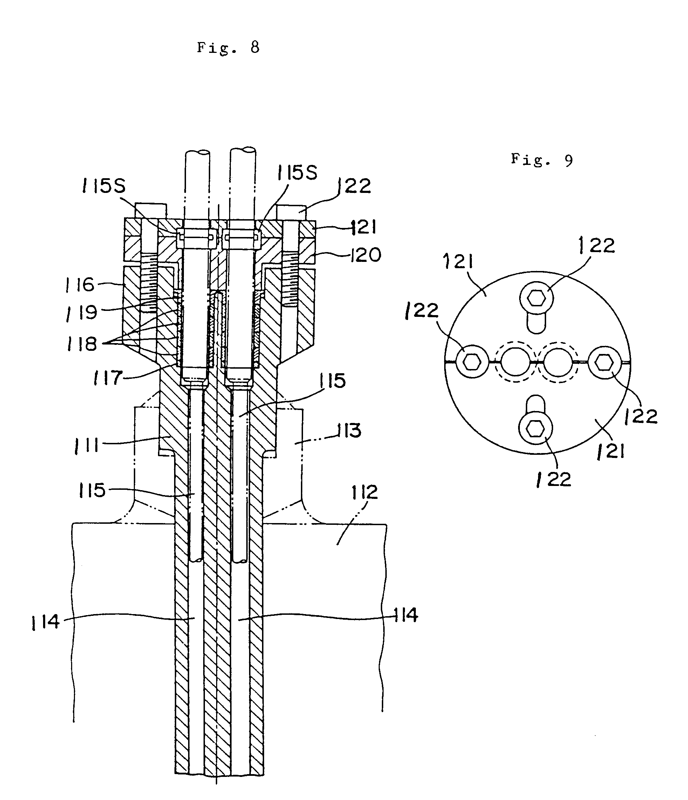

Next, a temperature measuring arrangement for a highly pressurized fluid flow according to the preferred embodiment of the present invention will be described with reference to Figs. 8 to 11. In Fig. 8, a resistance temperature detector well structure (hereinafter abbreviated as "RTD well structure") 111 made of stainless steel is fixed by welding to a tube stub 113 provided on a piping 112 of highly pressurized fluid flow to be measured. In the RTD well structure 111 are formed two insert holes 114 for inserting resistance temperature detectors, and a resistance temperature detector (hereinafter abbreviated as "RTD") 115 is inserted into each of the insert holes 114. It is to be noted that while two insert holes 114 are formed in the illustrated embodiment, the present invention is not limited to two insert holes.

At the top of the RTD well structure 111 is provided a sealing section drum body 116, and within this sealing section drum body 116 are fitted a bottom ring 117 made of stainless steel, seal packings 118 and a junk ring 119 made of stainless steel, sequentially from the bottom. The junk ring 119 is pressed by bolts 122 via a flange type press metal 120 and slit plates 121, hence the seal packings 118 placed under the junk ring 119 are compressed, thereby the RTD's are fixed, and simultaneously sealing capability is realized. Projections 115s are jointed to the respective RTD's 115, so that when an excessive drawing force is exerted upon the RTD 115, the projection 115s is engaged with the split plates 121 to prevent the RTD 115 from being withdrawn.

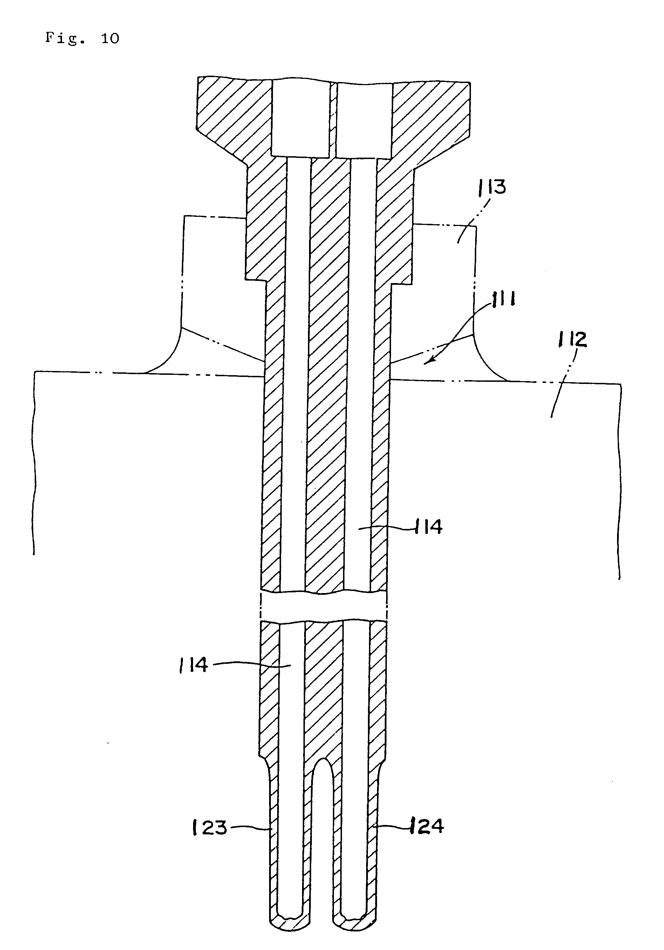

As shown in Fig. 10, in the temperature sensing portion at the bottom of the RTD well structure 111 are provided independent nippled-shaped protrusions 123 and 124 in which insert holes 114 are respectively formed, and the tip ends of the respective protrusions are closed so that insert holes 114 serving as independent dry wells can be formed within the well structure 111. A temperature sensing assembly 115a of the RTD 115 is inserted into the closed tip end portion of the insert hole 114.

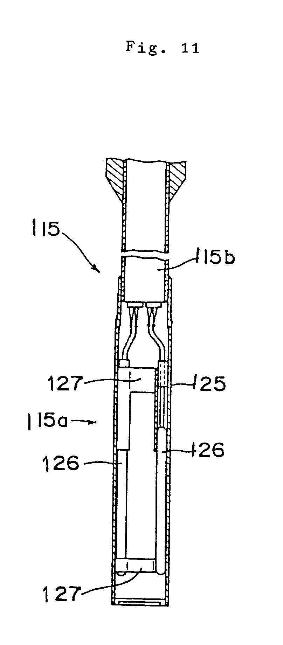

Now, the structure of the RTD 115 will be explained with reference to Fig. 11. The RTD consists of the temperature sensing assembly 115a and a sheath cable assembly 115b connected thereto. Similarly to the above-described first preferred embodiment shown in Figs. 1 to 6, the temperature sensing assembly 115a is composed of a protective case 125 and two resistance elements 126. The protective case 125 has a thin-walled tubular shape, and onto the inner surface of the protective case 125 are secured two resistance elements 126 as separated by a spacer 127 at an angular interval of 180° by means of an inorganic adhesive having thermal resistance, radiation resistance and a high thermal conductivity. This RTD 115 is excellent in fast responsiveness because the resistance elements 126 are secured to the inner surface of the protective case 125.

Now description will be made on the operation of the RTD well structure 111 having the above-described construction. The RTD well structure 111 is fixed by welding to the tube stub 113 and the nipple-shaped protrusions 123 and 124 are disposed within the piping 112 for passing the fluid to be measured. Two RTD's for normal use and for backup use are inserted into the respective insert holes 114, and the temperature sensing assembly 115a of each RTD 115 is disposed close to the tip end of the insert hole 114. Then, in the sealing section drum body 116 are sequentially fitted the bottom rings 116, seal packings 118 and junk rings 119 for the respective RTD's 115, and thereafter the flange type press metal 120 and the split plate 121 are inserted and fixed by means of the bolts 122. Thereby the respective RTD's 115 can be individually sealed, and at the same time they are fixed to the RTD well structure 111. Thus the RTD 115 for normal use as well as the RTD 115 for backup use are held in the single RTD well structure 111, and the temperature sensing assemblies 115a of the respective RTD's 115 are disposed at the same position within the piping. Since the respective temperature sensing assemblies 115a are inserted into the insert holes 114 within the independent nipple-shaped protrusions 123 and 124, the fluid to be measured in temperature can approach the circumferences of the respective temperature sensing assemblies 115a under equal thermo-hydraulic conditions. Thereby, fast responsiveness of the RTD 115 can be realized, and the RTD 115 is made optimum for its condition of use.

By employing the above-described RTD well structure 111, in the case where an RTD 115 for backup use is to be additionally provided in the piping 112 for the fluid to be measured in temperature in addition to an RTD 115 for normal use, there is no need to newly provide an additional RTD well, hence an additional work is unnecessary, and an installation expense and labor would not be increased. Moreover, as the temperature sensing assemblies 115a of the normal and backup RTD's 115 are disposed at the same position, temperature of fluid at the same location can be measured. In addition, since the temperature sensing assemblies 115a of the normal and backup RTD's 115 are inserted and held in the independent nipple-shaped protrusions 123 and 124, the temperature of the fluid to be measured can be measured under equal thermohydraulic conditions. Furthermore, even if one of the nipple-shaped protrusions 123 and 124 should break down, as the normal and backup RTD's 115 are independently sealed, soundness of the RTD 115 on the unbroken side can be maintained, and so, precise temperature can be continuously effected.

As will be apparent from the above description, with the resistance temperature detector according to the present invention, since two resistance elements are provided on an inner surface of a thin-walled tubular sheath temperature sensing assembly forming a vacant space therein, even in the event that one of the resistance elements has become faulty, measurement of a fluid temperature can be done at the same location by means of the other resistance element. In addition, according to the present invention, since normal and backup resistance elements are provided on an inner surface of a thin-walled tubular sheath temperature sensing assembly and the lead wires of the resistance elements are independently connected to sheath cables, the resistance elements would come close to outer fluid to be measured in temperature and a thermal conductivity is enhanced, at the same time a heat capacity within a protective case can be reduced, and there is no fear that degradation of insulation between conductors of the resistance elements and shunting between lead wires may arise. As a result, continuity of temperature measurement can be insured, a response characteristic can be greatly enhanced, and reliability of a resistance temperature detector is improved.

In addition, with the well structure in the resistance temperature measuring arrangement according to the present invention, since it can hold a plurality of resistance temperature detectors and temperature sensing portions are disposed independently of each other as nipple-shaped protrusions, in addition to a normal resistance temperature detector a backup resistance temperature detector can be held at the same location of the fluid, and the fluid to be measured in temperature can approach the circumference of the respective temperature sensing portions under equal thermo-hydraulic conditions. As a result, it has become possible to hold a plurality of resistance temperature detectors without lowering reliability of measurement, and also, additional working upon additionally installing a resistance temperature detector can be omitted.

## Claims

1. A resistance temperature detector (11) for measuring the temperature of a fluid flow, comprising:
a case (26) having a first closed end;
a sheath cable assembly (16) secured to a second end of said case (26) to thereby define a sealed vacant space within said case (26);
normal and backup temperature sensing resistance elements (27, 28); and
a plurality of insulated lead wires (18, 19) extending between and electrically connecting said normal resistance element (22) and said cable assembly (16), and extending between and electrically connecting said backup resistance element (28) and said cable assembly (16),
characterized in that
said case (26) is a thin-walled tubular case having a continuous and uniform surface,
the resistance elements (27, 28) are secured in spaced circumferential relation directly to the inner annular wall of said tubular case (26) within said sealed vacant space,
said resistance elements (27, 28) being secured to the inner wall of said tubular case (26) with an inorganic adhesive,
at least one spacer (29) extending between said resistance elements (27, 28) is provided to assist in maintaining said spaced relation of said resistance elements (27, 28) and the direct contact of said resistance elements (27, 28) and said inner annular wall of said tubular case (26), and the temperature detector (11) is housed in a well structure (111).

2. A detector as claimed in claim 1, wherein each of said resistance elements (27, 28) comprises:
an elongated ceramic mandrel (32);
a resistance wire (33) wound about said mandrel (32);
a ceramic tube (36) surrounding said mandrel (32) and said wire (33); and
end plates (37) connected to said mandrel (32) and said tube (36) at the ends thereof.

## Patentansprüche

1. Widerstandstemperaturfühler (11) zum Messen der Temperatur eines Fluidstroms, umfassend:
ein Gehäuse (26) mit einem ersten, geschlossenen Ende,
eine an einem zweiten Ende des Gehäuses (26) befestigte und dabei einen abgedichteten Hohlraum im Gehäuse (26) festlegende Mantelkabelanordnung (16),
Normal- und Paralleltemperaturmeß-Widerstandselemente (27, 28) sowie
eine Anzahl von isolierten Zuleitungsdrähten (18, 19), die zwischen dem Normalwiderstandselement (22) und der Kabelanordnung (16) verlaufen und diese elektrisch miteinander verbinden bzw. zwischen dem Parallelwiderstandselement (28) und der Kabelanordnung (16) verlaufen und diese elektrisch miteinander verbinden,
dadurch gekennzeichnet, daß
das Gehäuse (26) ein dünnwandiges rohrförmiges Gehäuse mit einer ununterbrochenen und gleichmäßigen Oberfläche ist,
die Widerstandselemente (27, 28) in beabstandeter Umfangsbeziehung innerhalb des abgedichteten Hohlraums unmittelbar an der inneren ringförmigen Wand des rohrförmigen Gehäuses (26) befestigt sind,
die Widerstandselemente (27, 28) mit Hilfe eines anorganischen Klebmittels an der Innenwand des rohrförmigen Gehäuses (26) befestigt sind,
mindestens ein zwischen den Widerstandselementen (27, 28) verlaufender Abstandhalter (29) vorgesehen ist, um das Aufrechterhalten der beabstandeten Beziehung der Widerstandselemente (27, 28) und des Direktkontakts der Widerstandselemente (27, 28) mit der inneren ringförmigen Wand des rohrförmigen Gehäuses (26) zu unterstützen, und der Temperaturfühler (11) in einer Schutzrohrstruktur (111) untergebracht ist.

2. Fühler nach Anspruch 1, wobei jedes der Widerstandselemente (27, 28) umfaßt:
einen langgestreckten Keramik-Kern (32),
einen um den Kern (32) gewickelten Widerstandsdraht (33),
ein den Kern (32) und den Draht (33) umschließendes Keramik-Rohr (36) sowie
mit dem Kern (32) und dem Rohr (36) an deren Enden verbundene Stirnplatten (37).

## Revendications

1. Détecteur de température à résistance (11) pour mesurer la température d'un flux de fluide, comprenant:
un boîtier (26) ayant une première extrémité fermée;
un ensemble gainé formant câble (16) fixé à une seconde extrémité dudit boîtier (26) pour définir ainsi un espace libre hermétique dans ledit boîtier (26)
des éléments résistifs normal et de secours (27, 28) de détection de température ; et
une pluralité de fils conducteurs isolés (18, 19) s'étendant entre, et reliant électriquement, ledit élément résistif normal (22) et ledit ensemble formant câble (16) et s'étendant entre et reliant électriquement, ledit élément résistif de secours (28) et ledit ensemble formant câble (16),
caractérisé en ce que
ledit boîtier (26) est un boîtier tubulaire à paroi mince ayant une surface uniforme et continue,
les éléments résistifs (27, 28) sont fixés dans une relation de séparation circonférentielle, directement sur la paroi annulaire interne dudit boîtier tubulaire (26) dans ledit espace libre hermétique,
lesdits éléments résistifs (27, 28) étant fixés sur une paroi interne dudit boîtier tubulaire (26) avec un adhésif inorganique,
au moins un séparateur (29) s'étendant entre lesdits éléments résistifs (27, 28) est fourni pour contribuer à maintenir ladite relation de séparation desdits éléments résistifs (27, 28), le contact direct desdits éléments résistifs (27, 28) avec ladite paroi annulaire interne dudit boîtier tubulaire (26), et le détecteur de température (11) est logé dans une structure en puits (111).

2. Détecteur selon la revendication 1, dans lequel chacun desdits éléments résistifs (27, 28) comprend:
un mandrin allongé en céramique (32)
un fil résistif (33) enroulé autour dudit mandrin (32);
un tube en céramique (37) entourant ledit mandrin (32) et ledit fil (33); et
des plaques d'extrémité (37) reliées audit mandrin (32) et audit tube (36) aux extrémités de celui-ci.
